# EUROPÄISCHE PATENTANMELDUNG

(11) **EP 0 751 478 A2**
(43) Veröffentlichungstag der Anmeldung: **02.01.1997**
(21) Anmeldenummer: 96113382.4
(22) Anmeldetag: 28.01.1995
(51) Int. Cl.: G06K 19/077

(54) **Kombinierte Chipkarte**

(30) Priorität: 08.02.1994 DE 4403753
(62) Teilanmeldung aus: 95907546.6
(71) Anmelder: Angewandte Digital Elektronik GmbH, 21521 Dassendorf (DE)
(72) Erfinder: Kreft, Hans.Diedrich, D-21521 Dassendorf (DE)
(74) Vertreter: Mierswa, Klaus, Dipl.-Ing.

(57) **Zusammenfassung**

Die Erfindung betrifft eine Chipkarte zur wahlfreien Kopplung eines als Mikroprozessor ausgebildeten ersten ICs zur galvanischen Verbindung über Anschlußkontakte mit einem Kartenanschlußgerät und eines zweiten ICs zur kontaktfreien Verbindung mit dem Kartenanschlußgerät. Die der galvanischen Verbindung mit dem Kartenanschlußgerät dienenden Anschlußkontakte (8) sind auf einem Kontaktblock (10,8) angeordnet, der als Schalter zum Ein- oder Ausschalten von kontaktfreien Funktionen der Chipkarte dient.

## Beschreibung

### Technisches Gebiet:

Die Erfindung betrifft eine Chipkarte zur wahlfreien Kopplung eines als Mikroprozessor ausgebildeten ersten IC's (µC) zur galvanischen Verbindung über Anschlußkontakte mit einem Kartenanschlußgerät und eines zweiten IC's (CCI) zur kontaktfreien Verbindung mit dem Kartenanschlußgerät gemäß dem Oberbegriff des Anspruchs 1.

### Stand der Technik:

Es sind Plastikkarten als Chipkarten bekannt, welche kontaktfrei oder kontaktbehaftet mit ihren Schreib/Lesegeräten Energie und Daten austauschen. Die Karten werden für vielfache Anwendungen wie zum Beispiel Telefon- oder Gesundheitskarten oder Zutrittskontrollkarten eingesetzt. Einen Überblick über solche Karten und deren Anwendungen ist in drei Ausgaben der deutschen Fachzeitschrift Elektronik Jahrgang 93 zusammengstellt. Derartige im Markt befindliche Chipkarten haben den Nachteil der Abnutzung der Kontaktflächen.

Durch die DE-C-39 35 364 ist eine Chipkarte bekannt geworden, auf der ein mit einem Kontaktfeld verbundener Chip angeordnet ist und die zusätzlich Spulen zur Spannungsversorgung des Chips und zum Datenaustausch aufweist. Ein Dioden-Kondensatornetzwerk dient zum Gleichrichten und Glätten der in den Spulen induzierten Spannung, die ebenfalls zur Versorgung des Chips dient und dazu an eine Schaltung geführt ist, die mittels zweier logischer Pegel eine weitere Schaltung steuert, welche ihrerseits mit dem Kontaktfeld und an ihren Ausgängen an den Chip angeschlossen ist, wobei entweder die Signale von den Spulen oder vom Kontaktfeld an den Chip durchgeschaltet werden.

Durch die WO 91/01533 ist ein Trägerelement mit einem integrierten Schaltkreis bzw. Halbleiterchip zum Einbau in Chipkarten bekannt geworden, welches ein flexibles Trägersubstrat aufweist, auf dessen Oberflächen mehrere Kontaktflächen vorgesehen sind, die über Leiterbahnen mit Anschlüssen für den Schaltkreis verbunden sind. Auf dem Trägersubstrat ist ein Versteifungsring aus Metall befestigt, der nur einen Teil der Fläche des Trägersubstrats umschließt und in dessen Innerem sich der Schaltkreis bzw. Halbleiterchip befindet. Der Versteifungsring weist eine höhere Biegesteifigkeit auf als das flexible Trägersubstrat, so daß sich bei Verbiegung desselben der Ring nicht verbiegt und somit der Schaltkreis bzw. Halbleiterchip gegen mechanische Zerstörung gesichert sein soll.

### Technische Aufgabe:

Der Erfindung liegt die Aufgabe zugrunde, die bekannte Chipkarte so auszubilden, daß sie mehrere verschiedene Funktionen zu erfüllen imstande ist.

### Darstellung der Erfindung und deren Vorteile:

Die Lösung der Aufgabe besteht erfindungsgemäß bei einer Chipkarte zur wahlfreien Kopplung eines als Mikroprozessor ausgebildeten ersten IC's (µC) zur galvanischen Verbindung über Anschlußkontakte mit einem Kartenanschlußgerät und eines zweiten IC's (CCI) zur kontaktfreien Verbindung mit dem Kartenanschlußgerät, darin, daß die der galvanischen Verbindung mit dem Kartenanschlußgerät dienenden Anschlußkontakte auf einem Kontaktblock angeordnet sind, der als Schalter zum Ein- oder Ausschalten von kontaktfreien Funktionen der Chipkarte dient.

Der Kontaktblock der Chipkarte erfüllt somit vorteilhaft mehrere Funktionen, nämlich eine Verbindungsfunktion, eine Schutzfunktion gegen mechanische Einwirkungen sowie eine Schaltfunktion für den Zweck einer Verbindung.

Vorteilhaft kann der zweite IC der Chipkarte, der zur kontakfreien Kopplung mit der Umwelt dient und der mit Spulen oder Kondensatoren verbunden ist, entweder unter dem Kontaktblock sitzten oder räumlich von diesem entfernt angeordnet sein. Die Oberfläche des Kontaktblockes kann als kapazitiv empfindliche Fläche ausgestaltet sein und der zweite IC einen Feldeffekttransistor aufweisen, an dessen Basis die kapazitiv empfindliche Fläche des Kontaktblockes angeschlossen ist zur Ausbildung als Schalter bei kapazitiver Ladungsänderung der Oberfläche des Kontaktblockes. Der Kontaktblock kann als auf physikalische Einwirkungen wie Druck, elektrische Felder etc. empfindlicher Sensor ausgebildet sein, dessen Ausgangssignal den ersten IC auf die gewünschte Kopplung schaltet. Die beiden IC's können in einen Einzel-Chip integriert sein. Entweder einer oder beide IC's können in einer Aussparung des Kontaktblockes zum Schutz gegen mechanische Einwirkungen angeordnet sein; die Aussparung des Kontaktblockes ist auf seiner Unterseite angeordnet. Der Kontaktblock kann aus einem stabilen Kernmaterial bestehen. Vorteilhaft kann der Schalter vom Inhaber der Chipkarte ein- und ausschaltbar sein, wie auch der Kontaktblock austauschbar ausgeführt sein kann.

### Kurzbeschreibung der Zeichnungen, in der zeigen:

- Figur 1: zwei IC's, von denen einer als Mikroprozessor (µC) und der andere als kontaktlose Koppeleinrichtung (CCI) ausgebildet ist
- Figur 2: die Unterseite einer Trägerfolie mit der Leiterbahnstruktur und Spulenwindungen für kontaktfreie Kopplung
- Figur 3: die Oberseite der Trägerfolie, in der Öffnungen und zusätzliche Folienöffnungen erkennbar sind
- Figur 4: im Schnitt Trägerfolie und IC, wobei auf der Oberseite der Trägerfolie ein IC angebracht ist
- Figur 5: den Kontaktblock in der Draufsicht

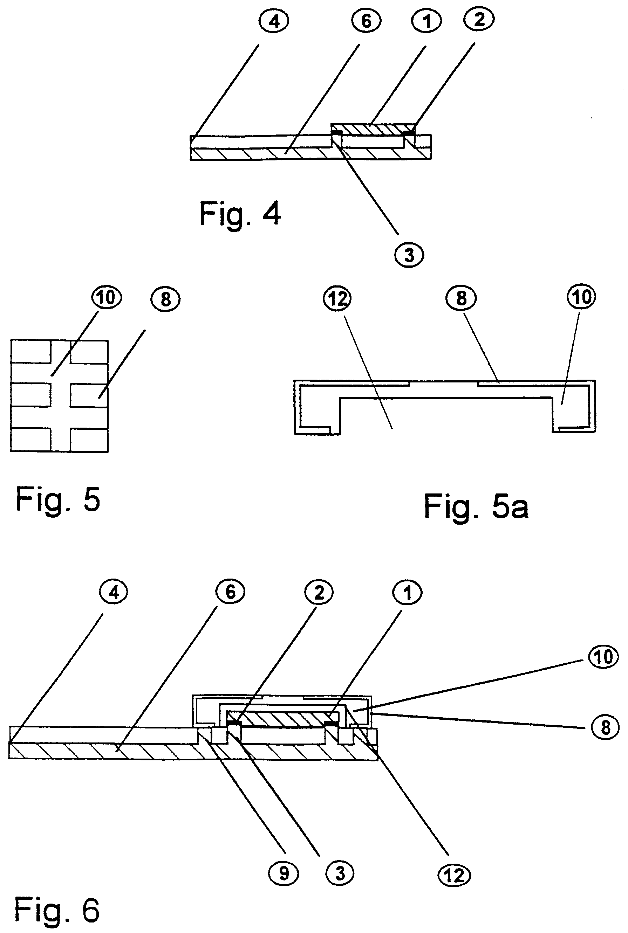

- Figur 5 a: den Kontatkblock in der Seitenansicht
- Figur 6: eine Schnittdarstellung und Kombination der Figuren 4 und 5 mit Kontaktblock, Trägerfolie und IC in einer Figur

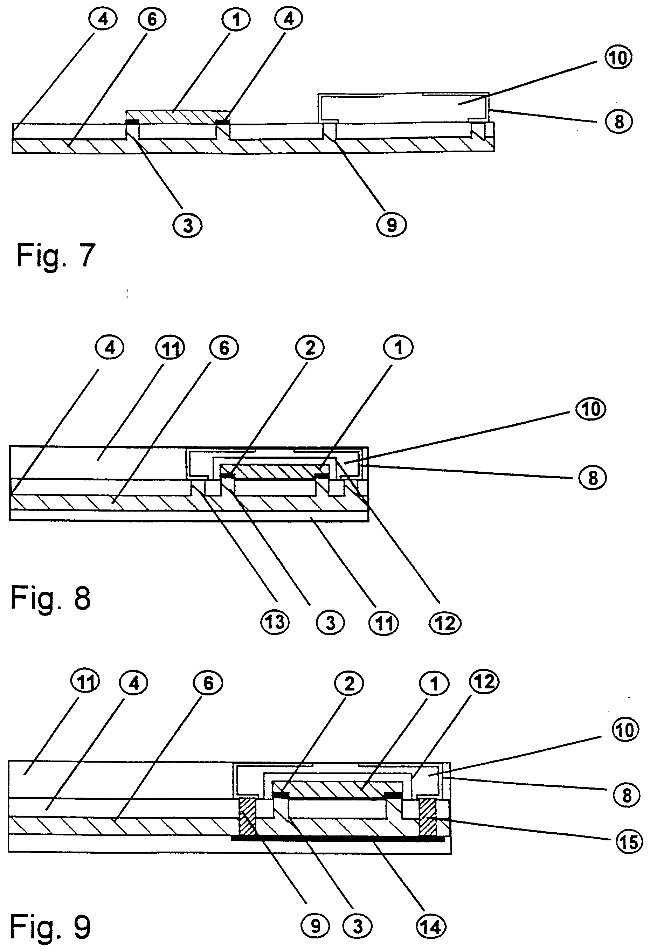

- Figur 7: eine Trennung von IC und Kontaktblock
- Figur 8: die Einbettung der Elemente aus Figur 6 in das Plastikmaterial eines Kartenkörpers und
- Figur 9: die Einbettung der Elemente aus Figur 6 in das Plastikmaterial eines Kartenkörpers, wobei zusätzlich ein Verstärkungsplättchen in den Kartenkörper eingebracht ist.

### Wege zur Ausführung der Erfindung:

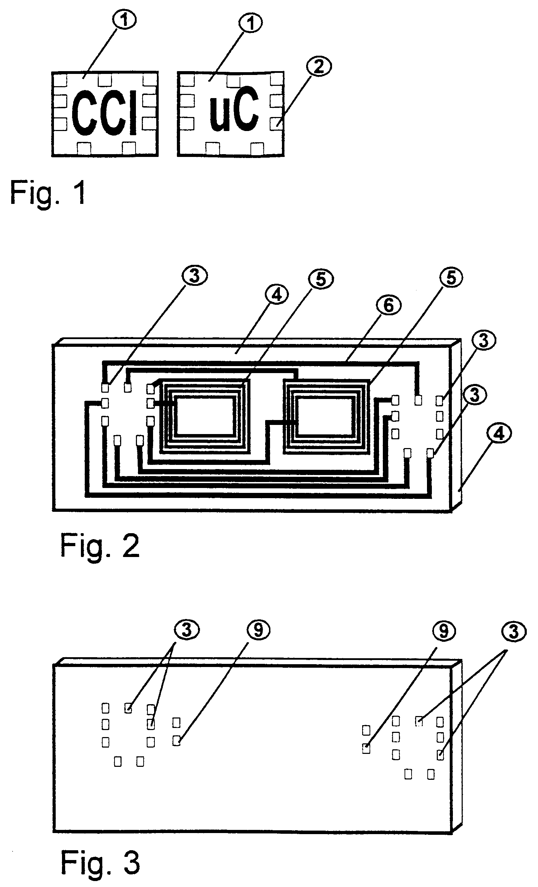

Figur 1 zeigt zwei IC's, von denen einer als Mikroprozessor, µC, und der andere als kontaktlose Koppeleinrichtung, CCI, ausgebildet ist. Die IC's bestehen üblicherweise aus einem Chipkörper 1 mit Halbleitereigenschaften und Anschlußkontakten 2, welche beispielsweise für Bondverbindungen genutzt werden. Der CCI stellt die kontaktfreie Kopplung des µC mit seiner Umwelt her. Die Kopplung kann induktiv, kapazitiv oder auf andere kontaktfreie Weise geschehen. Die Funktionen des CCI können auch in den µC integriert sein, so daß sich eine Einzel-Chip-Lösung ergibt.

Figur 2 zeigt die Unterseite einer Trägerfolie 4 mit der Leiterbahnstruktur 6 und Spulenwindungen 5 für die kontaktfreie Kopplung. Statt der Spulenwindungen könnten auch Kondensatorplatten zur kontaktfreien Kopplung auf der Trägerfolie enthalten sein. In der Trägerfolie 4 sind an den Stellen, an denen die Anschlußkontakte 2 der IC's bei einem Zusammenbringen von Trägerfolie 4 und IC's zu liegen kommen, Öffnungen 3 enthalten.

Figur 3 zeigt die Oberseite der Trägerfolie 4; es sind die Öffnungen 3 und zusätzliche Folienöffnungen 9 erkennbar. Auf dieser Oberseite der Trägerfolie kommen die IC's zu liegen.

Figur 4 zeigt im Schnitt Trägerfolie 4 und IC 1. Auf der Oberseite der Trägerfolie ist ein IC 1 angebracht. Die Anschlußkontakte 2 sind passend zu den Öffnungen 3 positioniert, so daß eine galvanische Verbindung zwischen Chip 1 über die Anschlußkontakte 2 durch die Öffnungen 3 mit der Leiterbahnstruktur 6 hergestellt werden kann. Die Herstellung dieser Leiterbahnstrukturen geschieht vorteilhafterweise nach einem additiven Verfahren. Es wird zunächst ein katalytisches Material als Druckmuster der Leiterverbindungen auf die Trägerfolie 4 aufgebracht. Anschließend wird in einem chemischen Bad an den Stellen des katalytischen Materials ein Leiter, Kupfer oder Aluminium, abgeschieden.

Figur 5 zeigt einen Kontaktblock in der Draufsicht, enthaltend das stabile Kernmaterial 10 mit Kontaktflächen 8 für eine galvanische Verbindung mit Kartenanschlußgeräten. Figur 5a zeigt den Kontaktblock in der Seitenansicht. Das Material der Kontaktflächen 8 umschließt das Kernmaterial 10 derart, daß zwischen der Oberseite und der Unterseite eine galvanische Verbindung entsteht. Die Stellen, welche an den Folienöffnungen 9 zu liegen kommen, sind mit leitendem Material versehen. In das Kernmaterial 10 ist eine Aussparung 12 zur Aufnahme der IC's 1 eingebracht.

Der mechanisch stabile Kontaktblock 10,8 enthält in der Aussparung 12 IC's, welche durch die Stabilität des Kontaktblockes mechanisch geschützt sind. Der Kontaktblock 10,8 enthält auf seiner Oberseite galvanisch leitendes Material, welches auf der Oberseite als Kontaktflächen 8 für kontaktbehaftete Chipkarten ausgeführt sind. Die Kontaktflächen dienen zur Verbindung zwischen Kartenanschlußgeräten außerhalb der Karte und IC's, welche in der Aussparung enthalten sind. Geschützt unter dem Kontaktblock sitzt ein weiterer IC, CCI, der zur kontaktlosen Kopplung dient und mit den Spulen 5 oder Kondensatoren verbunden ist. Dieser zweite IC, CCI, stellt die kontaktfreie Kopplung mit Kartenanschlußgeräten außerhalb der Chipkarte her.

Indem die Oberfläche des Kontaktblocks gleichzeitig zum Beispiel als kapazitiv empfindliche Fläche mit der Basis eines Feldeffektransistors im zweiten IC verbunden ist, dient sie als Schalter bei kapazitiver Ladungsänderung der Oberfläche des Kontaktblocks, der damit die zusätzliche Funktion eines Schalters erfüllt. Mit Hilfe des Schalters können beispielsweise kontaktfreie Funktionen der Karte von dem Inhaber der Karte ein- oder ausgeschaltet werden. Dies kann zweckmäßig sein, wenn die kontaktfreie Fernabfrage ausgeschlossen sein soll.

Figur 6 zeigt Kontaktblock, Trägerfolie und IC in einer Figur und ist eine Schnittdarstellung und Kombination der Figuren 4 und 5. Der Kontaktblock ist mit seiner Aussparung 12 über dem IC 1 angebracht und wirkt durch seine mechanisch stabile Ausgestaltung als Schutz vor mechanischer Einwirkung für den IC 1. Gleichzeitig stellen die galvanisch leitenden Flächen 8 zwischen der Oberseite des Kontaktblockes und der Unterseite der Trägerfolie mit ihrer Leiterbahnstruktur 6 eine Verbindung dar; hierzu dienen die Folienöffnungen 9. Durch diese Ausgestaltung werden die Signale von der Oberseite des Kontaktblockes mit der Leiterbahnstruktur verbunden und können derart an die Anschlußkontakte 2 der IC's geführt werden.

Aus Figur 7 ist ein Ausführungsbeispiel ersichtlich, bei dem IC's und Kontaktblock 10,8 räumlich getrennt angeordnet sind. Der Kontaktblock 10,8 stellt keine zusätzliche Sicherheit für die IC's 1 mehr dar, kann aber weiterhin als ein Schalter genutzt werden, der sich an den Stellen befindet, an denen üblicherweise die Kontaktflächen bei kontaktbehafteten Karten sitzen.

Die Einbettung der Elemente aus Figur 6 in das Plastikmaterial eines Kartenkörpers 11 ist in Figur 8 gezeigt.

Figur 9 zeigt die Einbettung der Elemente der Figur 6 in das Plastikmaterial eines Kartenkörpers 11. Zusätzlich ist ein Verstärkungsplättchen 14 unterhalb der Trägerfolie 4 und der IC's 1 in den Kartenkörper eingebracht, welches die ungeschützte Seite der IC's gegen mechanische Einwirkungen schützt. Zur Aufrechterhaltung eines mechanischen Abstandes bei Druckeinwirkung auf den Kontaktblock 10,8 sind mechanische Verbindungsstücke 15 fest auf dem Verstärkungsplättchen 14 montiert.

Auf diesen Verbindungsstücken 15 liegen die unteren Kontaktflächen des Kontaktblockes, womit galvanisch leitende Verbindungen zwischen Kontaktflächen des Kontaktblocks und Verstärkungsplättchen gegeben sind. Zusätzlich kann das Verstärkungsplättchen diese Verbindung weiter zu Leiterbahnen der Trägerfolie weiterführen, womit eine Verbindung zwischen Kontaktflächen des Kontaktblockes und IC hergestellt ist.

Dadurch kann der Kontaktblock nach Figur 9 austauschbar ausgeführt sein, da die Verbindung zwischen Kontaktfeldern des Kontaktblockes und IC nicht mehr durch das Galvanisierungsmaterial hergestellt wird, sondern durch ein Verbindungselement zwischen Kontaktblock und Verstärkungsplättchen 14. Das Verstärkungsplättchen 14, das mit seinen mechanischen Verbindungsstücken 15 bei einem Kontaktblockaustausch unverändert bleibt, gewährleistet somit die einwandfreie und ungestörte Verbindung zwischen IC und Kontaktflächen des Kontaktblocks. Die Verbindungsstücke 15 sind durch die Löcher 9 in der Trägerfolie 4, Figur 3, geführt. Das Verstärkungsplättchen 14 ist mit seinen Verbindungsstücken 15 mechanisch oder zum Beispiel magnetisch mit dem austauschbaren Kontaktblock 10,8 verbunden. Das Verstärkungsplättchen 14 stellt zusätzlich die Verbindung der Kontaktflächen 8 des Kontaktblockes 10 zu den Leiterbahnstrukturen 6 der Trägerfolie 4 her. Es ist derart möglich, den Kontaktblock im Falle beschädigter oder abgenutzter Konatkflächen 8 auszutauschen und die einwandfreie Kontaktierung von IC's und Kartenanschlußgeräten außerhalb der Karte zu gewährleisten.

### Gewerbliche Anwendbarkeit:

Die Erfindung ist insbesondere bei Chipkarten gewerblich anwendbar, welche mit dem beschriebenen Kontaktblock ausgestattet sind. Der Kontaktblock kann als Schalter zum Ein- oder Ausschalten von kontaktfreien Funktionen und als Sensor benutzt werden, der auf physikalische Einwirkungen, wie Druck, elektrische Felder etc., anspricht.

## Patentansprüche

1. Chipkarte zur wahlfreien Kopplung eines als Mikroprozessor ausgebildeten ersten IC's (µC) zur galvanischen Verbindung über Anschlußkontakte (8) mit einem Kartenanschlußgerät und eines zweiten IC's (CCI) zur kontaktfreien Verbindung mit dem Kartenanschlußgerät,
dadurch gekennzeichnet,
daß die der galvanischen Verbindung mit dem Kartenanschlußgerät dienenden Anschlußkontakte (8) auf einem Kontaktblock (10,8) angeordnet sind, der als Schalter zum Ein- oder Ausschalten von kontaktfreien Funktionen der Chipkarte dient.

2. Chipkarte nach Anspruch 1, dadurch gekennzeichnet,
daß der zweite IC (CCI), der zur kontakfreien Kopplung mit der Umwelt dient und der mit Spulen (5) oder Kondensatoren verbunden ist, entweder unter dem Kontaktblock (10,8) sitzt oder räumlich von diesem entfernt angeordnet ist.

3. Chipkarte nach Anspruch 1, dadurch gekennzeichnet,
daß die Oberfläche des Kontaktblockes als kapazitiv empfindliche Fläche ausgestaltet ist und der zweite IC (CCI) einen Feldeffekttransistor aufweist, an dessen Basis die kapazitiv empfindliche Fläche des Kontaktblockes angeschlossen ist zur Ausbildung als Schalter bei kapazitiver Ladungsänderung der Oberfläche des Kontaktblockes.

4. Chipkarte nach Anspruch 1, dadurch gekennzeichnet,
daß der Kontaktblock (10,8) als auf physikalische Einwirkungen wie Druck, elektrische Felder etc. empfindlicher Sensor ausgebildet ist, dessen Ausgangssignal den ersten IC (µC) auf die gewünschte Kopplung schaltet.

5. Chipkarte nach Anspruch 1, dadurch gekennzeichnet,
daß die beiden IC's (µC, CCI) in einen Einzel-Chip integriert sind.

6. Chipkarte nach Anspruch 1, dadurch gekennzeichnet,
daß entweder einer oder beide IC's (µC, CCI) in einer Aussparung (12) des Kontaktblockes zum Schutz gegen mechanische Einwirkungen angeordnet sind.

7. Chipkarte nach Anspruch 1, dadurch gekennzeichnet,
daß die Aussparung (12) des Kontaktblockes (10,8) auf seiner Unterseite angeordnet ist.

8. Chipkarte nach Anspruch 1, dadurch gekennzeichnet,
daß der Kontaktblock (10,8) aus einem stabilen Kernmaterial (10) besteht.

9. Chipkarte nach Anspruch 1, dadurch gekennzeichnet,
daß der Schalter vom Inhaber der Chipkarte ein- und ausschaltbar ist.

10. Chipkarte nach Anspruch 1, dadurch gekennzeichnet,
daß der Kontaktblock (10,8) austauschbar ausgeführt ist.
